# EUROPÄISCHE PATENTSCHRIFT

(11) **EP 1 118 628 B1**
(45) Veröffentlichungstag und Bekanntmachung des Hinweises auf die Patenterteilung: **18.08.2004**
(21) Anmeldenummer: 01810024.8
(22) Anmeldetag: 10.01.2001
(51) Int. Cl.: C08G 59/38, C08G 59/32, C04B 26/14, C09J 163/00

(54) **Härtbare Zwei-Komponenten-Mörtelmasse und deren Verwendung**
Curable two-part epoxy mortar composition and its use
Masse de mortier durcissible à base de résine époxide en deux parties et son utilisation

(30) Priorität: 21.01.2000 DE 10002605
(43) Veröffentlichungstag der Anmeldung: 25.07.2001
(73) Patentinhaber: HILTI Aktiengesellschaft, 9494 Schaan (LI)
(72) Erfinder: Gienau, Roland, 87679 Westendorf (DE); Krauter, Mechthild, 86179 Augsburg (DE); Dierker, Sascha, 86504 Merching (DE)
(74) Vertreter: Wildi, Roland

(56) Entgegenhaltungen:
- EP-A- 0 454 271
- US-A- 4 180 166
- US-A- 5 229 438
- DATABASE WPI Week 19021 Derwent Publications Ltd., London, GB; AN 1990-161509 XP002163215 & JP 02 104900 A (SEKISUI CHEM CO LTD), 17. April 1990 (1990-04-17)

## Beschreibung

Gegenstand der vorliegenden Erfindung sind eine härtbare Zwei-Komponenten-Mörtelmasse auf der Grundlage eines härtbaren Epoxidharzes, mindestens eines Reaktivverdünners für das Epoxidharz, eines Aminhärters und eines oder mehrerer anorganischer Füllstoffe, sowie gegebenenfalls von Härtungskatalysatoren, Rheologiehilfsmitteln. Thixotropiermitteln, Stabilisatoren, Dispergiermitteln, Steuerungsmitteln für die Reaktionsgeschwindigkeit und Netzmitteln, wobei der Aminhärter von dem härtbaren Epoxidharz und dem Reaktivverdünner reaktionsinhibierend getrennt vorliegt, sowie deren Verwendung zur Befestigung von Verankerungsmitteln, wie Ankerstangen, in Bohrlöchern.

Organische, härtbare Zwei-Komponenten-Mörtelmassen auf der Grundlage von härtbaren Epoxidharzen und Aminhärtern sind seit langem bekannt und werden als Klebstoffe, Lacke, Spachtelmassen zur Rißverfüllung und unter anderem zur Befestigung von Verankerungsmitteln, wie Ankerstangen, in Bohrlöchern, Dübellöchern und dergleichen verwendet. Bei der Anwendung solcher Mörtelmassen insbesondere auf Baustellen im Freien ergeben sich Schwierigkeiten, weil die Mörtelmasse einerseits auch bei tiefen Temperaturen gut handhabbar sein muß und andererseits bei erhöhten Temperaturen ein geringes Kriechen zeigen soll, gleichzeitig aber eine lange Verarbeitsungsdauer besitzen und dennoch schnell und vollständig aushärten muß unter Erzielung hoher Lastwerte auch bei tiefen Temperaturen und einer guten Wärmeformbeständigkeit der ausgehärteten Masse. Diese zum Teil widersprüchlichen Eigenschaftsprofile sind nicht ohne weiteres zu erfüllen. So ist es bei herkömmlichen Mörtelmassen üblich, zur Erzielung einer guten Handhabbarkeit bei tiefen Temperaturen einen hohen Anteil von niedrigviskosen Bestandteilen, einen geringen Füllstoffanteil und grobe Füllstoffe vorzusehen, was allerdings für ein geringes Kriechverhalten unter Last bei erhöhten Temperaturen von Nachteil ist. Andererseits wird eine lange Verarbeitungszeit durch einen hohen Anteil an nicht reaktiven bzw. nicht vernetzenden Verdünnern und wenig reaktiven Komponenten erreicht, was einer kurzen Durchhärtungsdauer entgegensteht.

In der nicht vorveröffentlichten deutschen Patentanmeldung 198 32 669.6 wird bereits eine härtbare Epoxidmasse vorgeschlagen, die Polyepoxid, Polyamin, Polyacetoacetat und eine Metallverbindung, namentlich die Verbindung eines Metallkations, sowie gegebenenfalls weitere übliche Bestandteile, wie Füllmittel, Verdünner, Härtungskatalysatoren, Rheologiehilfsmittel, Netzmittel, Farbstoffe und dergleichen enthält. Dabei dienen das Polyacetoacetat als Reaktivverdünner zur Verringerung der hohen Viskosität des flüssigen Polyepoxids und die Metallverbindung dazu, die Reaktivität gegenüber mineralischen Bohrlochwandungen zu verbessern.

Aus der ebenfalls nicht vorveröffentlichten deutschen Patentanmeldung 198 32 668.8 ist eine härtbare Zwei-Komponenten-Mörtelmasse mit härtbaren organischen und härtbaren anorganischen Bestandteilen und Härtern beschrieben, wobei die Härter von dem jeweiligen härtbaren Bestandteil reaktionsinhibierend getrennt, aber zur Anwendung bzw. Verwendung aktivierbar sind. Diese Masse enthält Epoxidharze und feinteiligen Zement als härtbare Bestandteile und Amine und Alkaliwasserglas als Härter. Diese anorganisch/organischen Mörtelmassen erfordern die Anwesenheit von Wasser zur Aushärtung des Zements, wodurch dieser vollständig umgesetzt wird, was zum Beispiel beim Auftreten von Rissen oder beim Eindringen von Wasser in den Ringspalt zwischen Ankerstange und Mörtel zu einer Korrosion namentlich von Stahl-Ankerstangen führen kann.

Die Aufgabe der vorliegenden Erfindung besteht nun darin, eine härtbare Zwei-Komponenten-Mörtelmasse der eingangs angegebenen Art anzugeben, die eine verbesserte Handhabbarkeit gegenüber handelsüblichen Systemen insbesondere bei tiefen Temperaturen bei einer langen Verarbeitungszeit und einer kurzen Durchhärtungsdauer besitzt, in ausgehärtetem Zustand eine niedrige Kriechneigung bei erhöhter Temperatur, eine gute Wärmeformbeständigkeit und eine hohe Chemikalienbeständigkeit besitzt sowie hohe Lastwerte bei tiefen Temperaturen (-5°C) bis hin zu erhöhten Temperaturen (60°C) zeigt und gemäß einer bevorzugten Ausführungsform eine korrosionsschützende Wirkung entfaltet.

Diese Aufgabe wird gelöst durch die härtbare Zwei-Komponenten-Mörtelmasse gemäß Anspruch 1. Die Unteransprüche betreffen bevorzugte Ausführungsformen dieses Erfindungsgegenstands sowie die Verwendung dieser Mörtelmasse zur Befestigung von Verankerungsmitteln in Bohrlöchern sowohl in natürlichem als auch in künstlichem Gestein.

Die Erfindung betrifft somit eine härtbare Zwei-Komponenten-Mörtelmasse auf der Grundlage eines härtbaren Epoxidharzes, mindestens zweier bestimmter Reaktivverdünner für das Epoxidharz, eines Aminhärters und eines oder mehrerer anorganischer Füllstoffe, sowie gegebenenfalls von Härtungskatalysatoren, Rheologiehilfsmitteln. Thixotropiermitteln, Stabilisatoren, Dispergiermitteln, Steuerungsmitteln für die Reaktionsgeschwindigkeit und Netzmitteln, wobei der Aminhärter von dem härtbaren Epoxidharz und dem Reaktivverdünner reaktionsinhibierend getrennt vorliegt, die dadurch gekennzeichnet ist, daß die Mörtelmasse einen vernetzenden, funktionelle Epoxygruppen aufweisenden Reaktivverdünner mit einer Epoxy-Funktionalität von mindestens 2 enthält.

Es hat sich überraschenderweise gezeigt, daß durch die Anwendung vernetzender, funktionelle Epoxygruppen aufweisender Reaktivverdünner mit einer Epoxy-Funktionalität von mindestens 2, insbesondere mit einer Epoxy-Funktionalität von 2 bis 3, die durch eine Mischung aus einem difunktionellen mit einem trifunktionellen Reaktivverdünner dieser Art erreicht werden kann, eine Mörtelmasse erhalten wird, welche die oben angesprochene Aufgabe in hervorragender Weise löst, indem durch die Anwesenheit dieses vernetzenden Reaktivverdünnergemisches die Nachteile der in herkömmlichen Mörtelmassen dieser Art eingesetzten Verdünnungsmittel oder Lösungsmittel, wie insbesondere Monogylcidyletherverbindungen, Benzylalkohol oder dergleichen, überwunden werden können und die für eine gute Auspreßbarkeit des Systems und Setzbarkeit der Anker insbesondere bei tiefen Temperaturen erforderliche Viskosität gezielt eingestellt werden und dennoch bei einer ausreichend langen Verarbeitungszeit eine schnelle Durchhärtung der Mörtelmasse erreicht werden kann. In gleicher Weise läßt sich eine geringe Kriechneigung unter Last insbesondere bei erhöhten Temperaturen erzielen.

Als vernetzende, funktionelle Epoxygruppen aufweisenden Reaktivverdünner mit einer Epoxy-Funktionalität sind Verbindungen gemeint, welche zwei mit dem Härter reagierende Epoxy-Gruppen aufweisen und somit eine Vernetzung der Polymerketten bewirken.

Durch die Anwendung des vernetzenden Reaktivverdünnergemisches mit einer Funktionalität von mindestens 2 läßt sich gegenüber den bislang eingesetzten bifunktionellen oder monofunktionellen Reaktivverdünnern, also Reaktivverdünnern mit einer Epoxy-Funktionalität von weniger als 2, bei einer niedrigeren Viskosität der Mörtelmasse nach dem Vermischen der Bestandteile und deren Einbringen in das Bohrloch ein höherer Vernetzungsgrad bei einer hohen Reaktionsgeschwindigkeit erreichen.

Das daraus resultierende Polymer besitzt eine günstige vernetzte Struktur. Gleichzeitig enthält die Masse einen geringeren Anteil an extrahierbaren Anteilen und neigt daher weniger zur Bildung von Rissen, zum Schrumpfen und zum Kriechen bei erhöhten Temperaturen unter Last. Zudem lassen sich eine höhere Wärmeformbeständigkeit, eine verbesserte Zähigkeit und damit hohe Lastwerte auch bei erhöhten Temperaturen erzielen. Durch den Einsatz dieses erfindungsgemäß eingesetzten Reaktivverdünners ergeben sich auch bei tiefen Temperaturen von bis zu -5°C ausreichend kurze Härtungszeiten.

Die Mörtelmasse enthält als Reaktivverdünner eine Mischung aus mindestens einem Diglycidylether und mindestens einem Triglycidylether zur Einstellung einer mittleren Epoxy-Funktionalität von mindestens 2. Besonders bevorzugt ist die Verwendung von Glycerintriglycidylether, Pentaerythrittetraglycidylether und/oder Trimethylolpropantriglycidylether oder von Mischungen davon mit 1,4-Butandioldiglycidylether, Cyclohexandimethanoldiglycidylether, Neopentylglycoldiglycidylether, Hexandioldiglycidylether und/oder Propylenglycoldiglycidylether als Reaktivverdünner mit einer mittleren Epoxy-Funktionalität von mehr als 2. Dabei beträgt erfindungsgemäß das Gewichtsverhältnis von difunktionellem Reaktivverdünner zu trifunktionellem Reaktivverdünner in der Mischung 1:99 bis 99:1, vorzugsweise 30:70 bis 70:30.

Gemäß einer weiter bevorzugten Ausführungsform enthält die Zwei-Komponenten-Mörtelmasse die Reaktivverdünnermischung in einer Menge von 5 bis 35 Gew.-%, vorzugsweise 10 bis 25 Gew.-%, wobei hier und im folgenden die Mengenangaben auf das Gewicht der gesamten Zwei-Komponenten-Mörtelmasse bezogen sind. Dabei wird vorzugsweise ein Gewichtsverhältnis von härtbarem Epoxidharz zu vernetzendem Reaktivverdünner von 99:1 bis 50:50, vorzugsweise 75:25 bis 55:45 eingehalten.

Mit Vorteil wird die Menge des Reaktivverdünnergemisches und etwaiger weiterer Verdünnungsmittel so bemessen, daß sich in Abhängigkeit von den Umgebungstemperaturen eine Viskosität, gemessen nach der Hilti-Norm 0333, von 30 bis 150 Pas, vorzugsweise von 40 bis 60 Pas bei Raumtemperatur ergibt. Die Viskosität der Mörtelmasse wird nach der Hilti-Norm 0333 mit Hilfe eines Rotationsviskosimeters gemessen (HaakeRV3 mit Meßkopf 500, Steuergerät HaakeBG142, Einhängevorrichtung HaakeRSS mit 6 Stiften, Stiftlänge ohne Gewinde 200ml). Die Mörtelmasse wird in ein 250ml Weithals-Schraubglas eingefüllt, wobei auf Blasenfreiheit zu achten ist. Dann wird die Mörtelmasse auf 23 ± 1°C temperiert und die Meßeinrichtung zentrisch in die Prüfsubstanz eingetaucht, worauf die Messung durch Aufzeichnung der Fließkurve mit Hilfe eines X-Y-Schreibers der Firma Hewlett Packard bei Drehzahlen von 0 bis 64min⁻¹ durchgeführt wird. Die Kurven müssen einen stetigen Verlauf zeigen sowohl für den mit steigender Drehzahl aufgenommenen Kurvenast als auch für den gesamten, mit fallender Drehzahl aufgenommenen Kurvenast. Ausgewertet wird der mit fallender Drehzahl aufgenommene Kurvenast bei den Drehzahlen 4, 8, 16 und 32min⁻¹. Die Nennviskosität wird bei 16min⁻¹ ermittelt.

Gemäß einer bevorzugten Ausführungsform der Erfindung beträgt der Anteil an nichtvernetzenden Verdünnern bzw. Lösungsmitteln weniger als 3 Gew.-%, bezogen auf die Mörtelmasse. Als nichtvernetzende Verdünner können beispielsweise Phenylglycidylether, Butylglycidylether, o-Kresylglycidylether, p-tert.-Butylglycidylether, 2-Ethylhexylglycidylether, C₁₂/C₁₄-Alkylglycidylether, C₁₃/C₁₅-Alkylglycidylether, Benzylalkohol oder dergleichen eingesetzt werden.

Der Anteil an anorganischen Füllstoffen in der erfindungsgemäßen Mörtelmasse beträgt vorzugsweise weniger als 30 Vol.-%, noch bevorzugter weniger als 20 Vol.-%, da aufgrund des Einsatzes des beanspruchten Reaktivverdünners hohe Festigkeitswerte auch bei niedrigerem Füllstoffgehalt erzielt werden können. Die Bestimmung des Volumenprozentsatzes des anorganischen Füllstoffes erfolgt in der Weise, daß zunächst die Dichte der Mörtelmasse gemessen wird, wonach das Material bei 950°C verascht wird, was zur Folge hat, daß lediglich die anorganischen Füllstoffe zurückbleiben. Nach Bestimmung des Gewichts und der Dichte des zurückbleibenden Füllstoffes läßt sich der Volumenprozentsatz des anorganischen Füllstoffes in der Mörtelmasse ohne weiteres berechnen.

Gemäß eine besonders bevorzugten Ausführungsform der Erfindung enthält die Mörtelmasse als anorganischen Füllstoff mindestens einen in wäßrigem Medium alkalisch reagierenden Füllstoff, vorzugsweise ein Carbonat, Sulfat, Oxid, Aluminat oder Silikat eines Alkali- oder Erdalkalimetalls und/oder insbesondere einen Zement. Dabei wird der in der wasserfrei ausgehärteten erfindungsgemäßen Mörtelmasse enthaltene alkalisch reagierenden Füllstoff, namentlich der Zement nicht abgebunden, sondern dient als Füllstoff und als Alkalireserve zur Verhinderung der Korrosion von Verankerungselementen aus Stahl. So hat sich überraschenderweise gezeigt, daß beim eventuellen Eindringen von Feuchtigkeit der vorhandene Zement mit dieser Feuchtigkeit reagiert und lokal aushärtet und durch die Verursachung eines alkalischen pH-Werts eine Passivierung der mit der ausgehärteten Mörtelmasse in Kontakt stehenden Stahloberfläche verursacht. In dieser Weise wird eine unerwartete Korrosionsinhibierung erreicht, was mit den herkömmlichen Mörtelmassen in denen hydraulische Zemente unmittelbar bei der Härtung der Mörtelmasse mit Wasser umgesetzt werden, nicht möglich ist.

Mit Vorteil beträgt der Anteil des Zements in der Mörtelmasse 1 bis 40 Gew.-%, vorzugsweise 2 bis 10 Gew.-%, wobei als Zement vorzugsweise Portlandzement und/oder Aluminiumoxid-haltiger Zement, wie Aluminatzement bzw. Tonerdeschmelzzement enthalten ist.

Die erfindungsgemäße Zwei-Komponenten-Mörtelmasse enthält vorzugsweise als härtbares Epoxidharz einen Polyglycidylether eines mehrwertigen Alkohols oder Phenols, wie Ethylenglykol, Glycerin und insbesondere Bisphenol A, Bisphenol F und/oder Novolak. Die Epoxidäquivalentgewichte des erfindungsgemäß eingesetzten härtbaren Epoxidharzes liegen vorzugsweise im Bereich von etwa 150 bis 2.000, vorzugsweise etwa 170 bis 400. Geeignete Polyepoxidverbindungen sind beispielsweise in Lee, Neville, Handbook of Epoxy Resins (1967), beschrieben.

Als Aminhärter enthält die erfindungsgemäße Mörtelmasse vorzugsweise ein aliphatisches, cycloaliphatisches, aromatisches und/oder araliphatisches Amin oder Polyamin, wie Ethylendiamin, Isophorondiamin, Propylendiamin, Hexamethylendiamin, Diethylentriamin, Triethylentetramin, Teraethylenpentamin, m-Xylylendiamin etc. Besonders bevorzugt sind die durch Kondensation von Polyaminen, wie Polyalkylenpolyaminen, mit Aldehyden, wie Formaldehyd, und ein- oder mehrwertigen Phenolen erhältlichen hochreaktiven Mannichbasen und insbesondere solche ohne Restgehalte an Phenolen und toxischen Kondensationsprodukten.

In der erfindungsgemäßen Zwei-Komponenten-Mörtelmasse beträgt das Verhältnis der Zahl der reaktiven Aminwasserstoffatome zu der Zahl der Epoxygruppen des Epoxidharzes bzw. des Reaktivverdünners 2:1 bis 0,8:1, vorzugsweise 1,5:1 bis 0,9:1.

Neben dem bevorzugt eingesetzten alkalisch reagierenden Füllstoff sind erfindungsgemäß geeignete Füllstoffe beispielsweise Quarz, Silikat, Aluminosilikate, Korund, Keramikfüllstoffe, Glas, Carbonate, wie Kreide, Kaolin, anorganische Fasern, und dergleichen. In in bestimmten Fällen ist es weiterhin möglich, geringe Mengen organischer Füll- oder Verstärkungsstoffe zuzugeben, wie belspielsweise organische Fasern. Die erfindungsgemäße Zwei-Komponenten-Mörtelmasse kann weiterhin übliche und dem Fachmann bekannte Bestandteile enthalten, wie Härtungskatalysatoren, Rheologiehilfsmittel, Thixotropiermittel, Stabilisatoren, Dispergiermittel, Steuerungsmittel für die Reaktionsgeschwindigkeit, Netzmittel und dergleichen.
Gemäß einer bevorzugten Ausführungsform der Erfindung ist eine der Komponenten angefärbt, so daß sich die Mörtelmasse in angemischter Form deutlich von dem zu behandelnden Untergrund abhebt. Beispielsweise kann eine der Komponenten der Mörtelmasse einen Farbstoff oder ein Pigment, so daß es möglich wird, die angeteigte Mörtelmasse bei der Anwendung deutlich vom Untergrund unterscheidbar zu machen und den Durchmischungszustand der beiden Komponenten zu überprüfen. In dieser Weise kann sehr leicht festgestellt werden, ob die Komponenten ausreichend vermischt worden sind und das Bohrloch sauber verfüllt wurde und damit das Tragverhalten des Verankerungsmittels gewährleistet ist. Durch äußere Einflüsse, wie Witterungseinflüsse, wird der Farbunterschied Mörtel-Beton reduziert, so daß sich der Farbunterschied mit der Zeit verliert.

Die erfindungsgemäße Zwei-Komponenten-Mörtelmasse ist vorzugsweise in einer Zwei- oder Mehrkammervorrichtung reaktionsinhibierend getrennt und unter Anwendungsbedingungen zur Reaktion bringbar enthalten. Dabei sind das Epoxidharz und der Reaktivverdünner von dem Aminhärter getrennt konfektioniert, so daß die eine Komponente regelmäßig das härtbare Epoxidharz und den Reaktivverdünner enthält, während die andere Komponente den Aminhärter und gegebenenfalls Härtungskatalysatoren enthält. Die Füllstoffe können in der einen oder auch in der anderen Komponente enthalten sein, ebenso wie die anderen an sich bekannten üblichen Bestandteile.

Zu den Zwei- und Mehrkammersystemen, in denen die erfindungsgemäße härtbare Zwei-Komponenten-Mörtelmasse vorliegt, zählen insbesondere Patronen aus Glas, Kunststoff, Kunststoffolien oder Keramik, in deren Innerem die härtbaren Bestandteile von dem Aminhärter durch zerstörbare Wandungen voneinander getrennt angeordnet sind. Solche Patronensysteme werden in die Bohrlöcher eingesetzt, wobei zur Einleitung der Härtungsreaktion die Patronen einschließlich der darin befindlichen Trennwandungen zerstört werden, beispielsweise durch Eintreiben des Verankerungsmittels, wie der Ankerstange. Zu solchen Zwei- und Mehrkammersystemen gehören auch zwei oder mehr Foiienbeutel zur Trennung von härtbaren Bestandteilen und Härtern, wobei der Inhalt der Folienbeutel gemeinsam, beispielsweise über einen Statikmischer, in ein Bohrloch injiziert werden kann. Diese Patronen- und Folienbeutel-Systeme enthalten den Aminhärter reaktionsinhibierend getrennt von dem härtbaren Epoxidharz und dem Reaktivverdünner.

Ein weiterer Gegenstand der Erfindung ist die Verwendung der erfindungsgemäßen Zwei-Komponenten-Mörtelmasse der oben beschriebenen Art zur Befestigung von Verankerungsmitteln, wie Ankerstangen, sowohl in natürlichem als auch in künstlichem Gestein.

Es hat sich gezeigt, daß diese erfindungsgemäße Mörtelmasse bei langer Verarbeitungsdauer und schneller Durchhärtungszeit ausgezeichnete Festigkeitswerte ergibt, und zwar sowohl hohe Lastwerte bei den in der Befestigungstechnik üblichen Temperaturen von -5°C bis 60°C, eine hohe Wärmeformbeständigkeit und Chemikalienbeständigkeit bei gleichzeitig hohem Korrosionsschutz für mit dieser Mörtelmasse befestigten Stahl- oder Eisen-Verankerungsmitteln.

Das folgende Beispiel dient der weiteren Erläuterung der Erfindung.

### BEISPIEL

| **Komponente A** | |
|---|---|
| Bisphenol A-Epichlorhydrinharz, Molekulargewicht 700 | 30,2 Gew.-% |
| Bisphenol F-Epichlorhydrinharz, Molekulargewicht 700 | 12,9 Gew.-% |
| Glycerintriglycidylether | 6,2 Gew.-% |
| 1,4-Butandioldiglycidylether | 9,3 Gew.-% |
| 2-Ethylhexylglycidylether | 2,7 Gew.-% |
| Quarzsand (SiO₂) | 35,7 Gew.-% |
| Synthetisches hydrophobes amorphes Siliciumdioxid | 3,0 Gew.-% |
| **Summe:** | **100,0 Gew.-%** |

| **Komponente B** | |
|---|---|
| m-Xylylendiamin | 35,7 Gew.-% |
| Aliphatisches Polyamin | 21,8 Gew.-% |
| Benzylalkohol | 0,3 Gew.-% |
| Zement | 16,1 Gew.-% |
| Quarzsand (SiO₂) | 23,1 Gew.-% |
| Synthetisches hydrophobes amorphes Siliciumdioxid | 3,0 Gew.-% |
| **Summe:** | **100,0 Gew.-%** |

Die beiden Komponenten A und B werden in getrennten Kunststoffolienbeutel eingefüllt, wobei der Bestandteil B in die kleinere Kammer und der Bestandteil A in die größere Folie eingebracht wird. Durch Vereinigung der beiden Komponenten A und B in einem Mischungsverhältnis A:B von 3:1 (Volumen) nach dem Auspressen aus den Folienbeuteln in der Mischdüse wird der Aushärtungsprozeß ausgelöst.

Diese Mörtelmasse wird über die Mischdüse in ein Bohrloch ausgebracht und härtet nach dem Setzen der Ankerstange innerhalb von 12 Stunden bei Raumtemperatur (20°C) aus.

Die Auszugsfestigkeit der handelsüblichen Ankerstange (Dimension M12) nach dem Aushärten beträgt mehr als 55 kN.

## Patentansprüche

1. Härtbare Zwei-Komponenten-Mörtelmasse auf der Grundlage eines härtbaren Epoxidharzes, mindestens eines funktionelle Epoxygruppen aufweisenden Reaktivverdünners für das Epoxidharz, eines Aminhärters und eines oder mehrerer anorganischer Füllstoffe, sowie gegebenenfalls von Härtungskatalysatoren, Rheologiehilfsmitteln, Thixotropiermitteln, Stabilisatoren, Dispergiermitteln, Steuerungsmitteln für die Reaktionsgeschwindigkeit und Netzmitteln, wobei der Aminhärter von dem härtbaren Epoxidharz und dem Reaktivverdünner reaktionsinhibierend getrennt vorliegt, **dadurch gekennzeichnet, daß** die Mörtelmasse als Reaktivverdünner eine Mischung aus einem difunktionellen und einem trifunktionellen vernetzenden, funktionelle Epoxygruppen aufweisenden Reaktivverdünner enthält und die mittlere Epoxy-Funktionalität der Reaktivverdünnermischung größer als 2 ist.

2. Zwei-Komponenten-Mörtelmasse nach Anspruch 1, **dadurch gekennzeichnet, daß** die Mörtelmasse als Reaktivverdünner eine Mischung aus mindestens einem Diglycidylether und mindestens einem Triglycidylether enthält und die mittlere Epoxy-Funktionalität der Reaktivverdünnermischung größer als 2 ist.

3. Zwei-Komponenten-Mörtelmasse nach Anspruch 2, **dadurch gekennzeichnet, daß** die Mörtelmasse als Reaktivverdünner eine Mischung aus Glycerintriglycidylether, Pentaerythrittetraglycidylether, Trimethylolpropantriglycidylether oder Mischungen davon und 1,4-Butandioldiglycidylether, Cyclohexandimethanoldiglycidylether, Neopentylglycoldiglycidylether, Hexandioldiglycidylether und/oder Propylenglycoldiglycidylether enthält.

4. Zwei-Komponenten-Mörtelmasse nach den Ansprüchen 1 bis 3, **dadurch gekennzeichnet, daß** das Gewichtsverhältnis von difunktionellem zu trifunktionellem Reaktivverdünner in der Mischung 1:99 bis 99:1, vorzugsweise 30:70 bis 70:30 beträgt.

5. Zwei-Komponenten-Mörtelmasse nach einem der Ansprüche 1 bis 4, **dadurch gekennzeichnet, daß** sie die Reaktivverdünnermischung in einer Menge von 5 bis 35 Gew.-% enthält.

6. Zwei-Komponenten-Mörtelmasse nach Anspruch 5, **dadurch gekennzeichnet, daß** das Gewichtsverhältnis von härtbarem Epoxidharz zu vernetzendem Reaktivverdünner 99:1 bis 50:50, vorzugsweise 75:25 bis 55:45 beträgt.

7. Zwei-Komponenten-Mörtelmasse nach mindestens einem der vorhergehenden Ansprüche, **dadurch gekennzeichnet, daß** der Anteil an nicht vernetzenden Verdünnern weniger als 3 Gew.-%, bezogen auf die Mörtelmasse, beträgt.

8. Zwei-Komponenten-Mörtelmasse nach mindestens einem der vorhergehenden Ansprüche, **dadurch gekennzeichnet, daß** der Füllstoffanteil der Mörtelmasse weniger als 30 Vol.-%, vorzugsweise weniger als 20 Vol.-% beträgt.

9. Zwei-Komponenten-Mörtelmasse nach mindestens einem der vorhergehenden Ansprüche, **dadurch gekennzeichnet, daß** die Mörtelmasse als anorganischen Füllstoff einen in wäßrigem Medium alkalisch reagierenden Füllstoff enthält.

10. Zwei-Komponenten-Mörtelmasse nach Anspruch 9, **dadurch gekennzeichnet, daß** die Mörtelmasse als anorganischen Füllstoff ein Carbonat, Sulfat, Oxid, Aluminat oder Silikat eines Alkali- oder Erdalkalimetalls und/oder einen Zement enthält.

11. Zwei-Komponenten-Mörtelmasse nach Anspruch 9 oder 10, **dadurch gekennzeichnet, daß** Anteil des alkalisch reagierenden Füllstoffs, insbesondere des Zements in der Mörtelmasse 1 bis 40 Gew.-%, vorzugsweise 2 bis 10 Gew.-% beträgt.

12. Zwei-Komponenten-Mörtelmasse nach mindestens einem der vorhergehenden Ansprüche, **dadurch gekennzeichnet, daß** als Zement Portlandzement und/oder aluminiumoxidhaltiger Zement, wie Aluminatzement bzw. Tonerdeschmelzzement enthalten ist.

13. Zwei-Komponenten-Mörtelmasse nach mindestens einem der vorhergehenden Ansprüche, **dadurch gekennzeichnet, daß** als härtbares Epoxidharz ein Polyglycidylether eines mehrwertigen Alkohols und/oder Phenols, vorzugsweise ein Diglycidylether von Bisphenol A und/oder Bisphenol F und/oder von Novolak enthalten ist.

14. Zwei-Komponenten-Mörtelmasse nach mindestens einem der vorhergehenden Ansprüche, **dadurch gekennzeichnet, daß** als Aminhärter ein aliphatisches, cycloaliphatisches, aromatisches und/oder araliphatisches Amin oder Polyamin, vorzugsweise ein Alkylenpolyamin und/oder eine Mannichbase enthalten ist.

15. Zwei-Komponenten-Mörtelmasse nach mindestens einem der vorhergehenden Ansprüche, **dadurch gekennzeichnet, daß** das Verhältnis der Zahl der reaktiven Aminwasserstoffatome zu der Zahl der Epoxidgruppen des Epoxidharzes bzw. Reaktivverdünners 2:1 bis 0,8:1 beträgt.

16. Zwei-Komponenten-Mörtelmasse nach mindestens einem der vorhergehenden Ansprüche, **dadurch gekennzeichnet, daß** eine der Komponenten angefärbt ist und sich die Mörtelmasse in angemischter Form deutlich von dem zu behandelnden Untergrund abhebt.

17. Zwei-Komponenten-Mörtelmasse nach mindestens einem der vorhergehenden Ansprüche, **dadurch gekennzeichnet, daß** die Komponenten in einer Zwei- oder Mehrkammervorrichtung reaktionsinhibierend getrennt und unter Anwendungsbedingungen zur Reaktion bringbar enthalten sind.

18. Verwendung der Zwel-Komponenten-Mörtelmasse nach mindestens einem der vorhergehenden Ansprüche zur Befestigung von Verankerungsmitteln in Bohrlöchern.

## Claims

1. Curable two-component mortar substance based on a curable epoxide resin, at least one functional reactive thinner to include functional epoxy groups for the epoxide resin, an amine hardener and one or more inorganic filler substances as well as, if appropriate, curing catalysts, rheologic auxiliary means, thixotrop means, stabilisers, dispergents, means for controlling the reaction speed and bonding means, and the amine hardener is separated from the curable epoxide resin and the reactive thinner so as to inhibit reactions, **characterised in that** the mortar substance contains as reactive thinner a mixture of a di-functional and a tri-functional bonding reactive thinner with functional epoxy groups, and the mean epoxy functionality of the reactive thinner mixture is greater than 2.

2. Two-component mortar substance according to Claim 1, **characterised in that** the mortar substance comprises as reactive thinner a mixture of at least one diglycidylether and at least one triglycidylether, and the mean epoxy functionality of the reactive thinner mixture is greater than 2.

3. Two-component mortar substance according to Claim 2, **characterised in that** the mortar substance contains as reactive thinner a mixture of glycerintriglycidylether, pentaerythrittetraglycidylether, trimethylolpropanetriglycidylether or mixtures thereof and 1.4-butandioldiglycidylether, cyclohexandimethanoldiglycidylether, neopentylglycoldiglycidylether, hexandioldiglycidylether and/or propylenglycoldiglycidylether.

4. Two-component mortar substance according to Claims 1 to 3, **characterised in that** the weight ratio of di-functional and tri-functional reactive thinner in the mixture is 1:99 to 99:1, preferably 30:70 to 70:30.

5. Two-component mortar substance according to one of Claims 1 to 4, **characterised in that** it contains the reactive thinner mixture at a volume between 5 and 35 weight-%.

6. Two-component mortar substance according to Claim 5, **characterised in that** the weight ratio of curable epoxide resin to bonding reactive thinner lies between 99:1 and 50:50, preferably between 75:25 and 55:45.

7. Two-component mortar substance according to at least one of the above claims, **characterised in that** the proportion of non-bonding thinners is less than 3 weight-% relative to the mortar substance.

8. Two-component mortar substance according to at least one of the above claims, **characterised in that** the proportion of filler material in the mortar substance is less than 30 vol.-%, preferably less than 20 vol.-%.

9. Two-component mortar substance according to at least one of the above claims, **characterised in that** the mortar substance contains as inorganic filler material a filler material which alkalically reacts in an aqueous medium.

10. Two-component mortar substance according to Claim 9, **characterised in that** the mortar substance contains as inorganic filler material a carbonate, sulfate, oxide, aluminate or silicate of an alkali or earthalkali metal and/or a cement.

11. Two-component mortar substance according to Claim 9 or 10, **characterised in that** the proportion of the alkalically reacting filler material, in particular the cement in the mortar substance, lies between 1 and 40 weight-%, preferably between 2 and 10 weight-%.

12. Two-component mortar substance according to at least one of the above claims, **characterised in that** as cement is contained Portland cement and/or aluminiumoxide containing cement, such as aluminate cement or alum melt cement.

13. Two-component mortar substance according to at least one of the above claims, **characterised in that** as curable epoxide resin is included a polyglycidylether of a multivalent alcohol and/or phenol, preferably a diglycidylether of bisphenol A and/or biphenol F and/or novolak.

14. Two-component mortar substance according to at least one of the above claims, **characterised in that** an aliphatic, cycloaliphatic, aromatic and/or araliphatic amine or polyamine, preferably an alkylenepolyamine and/or a Mannich base, is contained as amine hardener.

15. Two-component mortar substance according to at least one of the above claims, **characterised in that** the ratio of the number of reactive aminenitrogen atoms relative to the number of epoxide groups of the epoxide resin or reactive thinner lies between 2:1 and 0.8:1.

16. Two-component mortar substance according to at least one of the above claims, **characterised in that** one of the components is dyed, and the mortar substance in its mixed form clearly distinguishable from the base to be processed.

17. Two-component mortar substance according to at least one of the above claims, **characterised in that** the components are contained separately and in a reaction inhibiting manner in a two- or multi-chamber device and react under conditions of application.

18. Use of the two-component mortar substance according to at least one of the above claims for mounting anchoring means in boreholes.

## Revendications

1. Composition de mortier durcissable à deux composants constituée d'une résine époxyde durcissable, d'au moins un diluant réactif présentant des groupes époxy fonctionnels pour la résine époxyde, d'un durcisseur amine et d'une ou de plusieurs charges inorganiques, ainsi qu'éventuellement de catalyseurs de durcissement, d'adjuvants de rhéologie, d'agents de thixotropie, de stabilisants, d'agents dispersants, d'agents de régulation pour la vitesse de réaction et d'agents mouillants, dans laquelle le durcisseur amine se présente séparément de la résine époxyde durcissable et du diluant réactif pour inhiber la réaction, **caractérisée en ce que** la composition de mortier contient comme diluant réactif un mélange d'un diluant réactif à réticulation difonctionnelle et d'un diluant à réticulation trifonctionnelle, présentant des groupes époxy fonctionnels, et la fonctionnalité époxy moyenne du mélange de diluants réactifs est supérieure à 2.

2. Composition de mortier à deux composants selon la revendication 1, **caractérisée en ce que** la composition de mortier contient comme diluant réactif un mélange d'au moins un diglycidyléther et d'au moins un triglycidyléther et la fonctionnalité époxy moyenne du mélange de diluants réactifs est supérieure à 2.

3. Composition de mortier à deux composants selon la revendication 2, **caractérisée en ce que** la composition de mortier contient comme diluant réactif un mélange de glycérinetriglycidyléther, de pentaérythritoltétraglycidyléther, de triméthylolpropanetriglycidyéther ou des mélanges de ceux-ci et de 1,4-butane-dioldiglycidyléther, de cyclohexanediméthanoldiglycidyléther, de néopentylglycoldiglycidyléther, d'hexanedioldiglycidyléther et/ou de propylèneglycoldiglycidyléther.

4. Composition de mortier à deux composants selon les revendications 1 à 3, **caractérisée en ce que** le rapport en poids des diluants réactifs difonctionnels par rapport aux trifonctionnels dans le mélange est de 1 : 99 à 99 : 1, de préférence de 30 : 70 à 70 : 30.

5. Composition de mortier à deux composants selon une des revendications 1 à 4, **caractérisée en ce qu'**elle contient le mélange de diluants réactifs en une quantité de 5 à 35 % en poids.

6. Composition de mortier à deux composants selon la revendication 5, **caractérisée en ce que** le rapport en poids de résine époxyde durcissable par rapport au diluant réactif réticulant est de 99 : 1 à 50 : 50, de préférence de 75 : 25 à 55 : 45.

7. Composition de mortier à deux composants selon au moins une des revendications précédentes, **caractérisée en ce que** la proportion de diluants non réticulant est inférieure à 3 % en poids, par rapport à la composition de mortier.

8. Composition de mortier à deux composants selon au moins une des revendications précédentes, **caractérisée en ce que** la proportion de charge de la composition de mortier est inférieure à 30 % en volume, de préférence inférieure à 20 % en volume.

9. Composition de mortier à deux composants selon au moins une des revendications précédentes, **caractérisée en ce que** la composition de mortier contient comme charge inorganique une charge réagissant de manière alcaline en milieu aqueux.

10. Composition de mortier à deux composants selon la revendication 9, **caractérisée en ce que** la composition de mortier contient comme charge inorganique un carbonate, sulfate, oxyde, aluminate ou silicate d'un métal alcalin ou alcalino-terreux et/ou un ciment.

11. Composition de mortier à deux composants selon la revendication 9 ou 10, **caractérisée en ce que** la concentration de la charge réagissant de manière alcaline, en particulier du ciment dans la composition de mortier est de 1 à 40 % en poids, de préférence de 2 à 10 % en poids.

12. Composition de mortier à deux composants selon au moins une des revendications précédentes, **caractérisée en ce qu'**elle contient comme ciment du ciment de Portland et/ou un ciment contenant de l'oxyde d'aluminium, comme un ciment d'aluminate ou un ciment alumineux fondu.

13. Composition de mortier à deux composants selon au moins une des revendications précédentes, **caractérisée en ce qu'elle** contient comme résine époxyde durcissable un polyglycidyléther d'un alcool et/ou phénol polyhydroxylé, de préférence un diglycidyléther de bisphénol A et/ou bisphénol F et/ou de novolaque.

14. Composition de mortier à deux composants selon au moins une des revendications précédentes, **caractérisée en ce qu'elle** contient comme durcisseur amine une amine ou polyamine aliphatique, cycloaliphatique, aromatique et/ou araliphatique, de préférence une alkylènepolyamine et/ou une base de Manich.

15. Composition de mortier à deux composants selon au moins une des revendications précédentes, **caractérisée en ce que** le rapport du nombre des atomes d'hydrogène amine réactifs par rapport au nombre des groupes époxyde de la résine époxyde ou du diluant réactif est de 2 : 1 à 0,8 : 1.

16. Composition de mortier à deux composants selon au moins une des revendications précédentes, **caractérisée en ce que** l'un des composants est coloré et contraste distinctement sous forme mélangée du substrat traité.

17. Composition de mortier à deux composants selon au moins une des revendications précédentes, **caractérisée en ce que** les composants sont séparés dans un dispositif à deux chambres ou plus pour inhiber la réaction et sont amenés à réagir dans les conditions d'utilisation.

18. Utilisation de la composition de mortier à deux composants selon au moins une des revendications précédentes pour la fixation d'éléments d'ancrage dans des forures.
